# EUROPÄISCHE PATENTANMELDUNG

(11) **EP 2 703 322 A1**
(43) Veröffentlichungstag der Anmeldung: **05.03.2014**
(21) Anmeldenummer: 13182628.1
(22) Anmeldetag: 02.09.2013
(51) Int. Cl.: B65G 47/86

(54) **Greifeinrichtung zum Greifen von Behältnissen**

(30) Priorität: 31.08.2012 DE 102012108087
(71) Anmelder: Krones AG, 93073 Neutraubling (DE)
(72) Erfinder: Summer, Markus, 93073 Neutraubling (DE)
(74) Vertreter: Hannke, Christian

(57) **Zusammenfassung**

Greifeinrichtung (1) zum Greifen von Behältnissen (10) mit einem ersten Greifelement (2) und einem zweiten Greifelement (4), wobei das erste Greifelement (2) und das zweite Greifelement (4) jeweils einen Halteabschnitt (22, 42) zum Halten der Behältnisse (10) aufweisen und wobei das erste Greifelement (2) einen Grundkörper (24) aufweist und das zweite Greifelement (4) ebenfalls einen Grundkörper (44) aufweist und wobei wenigstens ein Greifelement (2, 4) um eine vorgegebene Schwenkachse (Z) schwenkbar ist, um die Greifeinrichtung (1) zwischen einem geschlossenen Zustand, in dem ein Behältnis (10) gehalten werden kann und einem geöffneten Zustand überzuführen. Erfindungsgemäß sind der erste Grundkörper (24) und der zweite Grundkörper (44) in Richtung der Schwenkachse (Z) wenigstens abschnittsweise übereinander angeordnet und wenigstens ein Greifelement (2, 4) weist eine Nut (26, 46) auf, in der ein Führungselement (30) verschiebbar gegenüber dieser Nut (26, 46) angeordnet ist, wobei ein Abstand zwischen diesem Führungselement (30) und der Schwenkachse (Z) veränderbar ist und die Nut (26, 46) derart verläuft ist, dass durch eine Veränderung des Abstands zwischen dem Führungselement (30) und der Schwenkachse (Z) eine Schwenkbewegung des ersten Greifelements (2) gegenüber dem zweiten Greifelement (4) bewirkt wird.

## Beschreibung

Die vorliegende Erfindung bezieht sich auf eine Greifeinrichtung zum Greifen von Behältnissen. In der Getränke herstellenden Industrie ist es bekannt, dass Behältnisse oftmals einer Vielzahl von Verfahrensschritten unterworfen werden, wie beispielsweise einem Blasformvorgang, einem Sterilisationsvorgang und/oder einem Füllvorgang. Zu diesem Zweck werden die Behältnisse oftmals von einer Maschine zu einer weiteren Maschine transportiert. Auch die jeweiligen Behandlungsmaschinen führen üblicherweise die Behandlungsvorgänge während des Transports der Kunststoffbehältnisse bzw. Behältnisse durch. Zu diesem Zweck weisen derartige Transporteinrichtungen üblicherweise Halte- bzw. Greifelemente auf, welche die Behältnisse halten.

Aus dem Stand der Technik sind diverse derartige Greifeinrichtungen bekannt, welche beispielsweise die Behältnisse in einem Bereich ihrer Mündung, insbesondere unterhalb deren Tragring greifen. Mittels dieser Greifeinrichtungen ist ein individueller Transport der Behältnisse möglich.

So beschreibt beispielsweise die EP 1 979 153 eine Vorrichtung zur Blasformung von Behältern mit Transportelementen mit zwei Zangenarmen. Dabei ist jeder dieser Zangenarme über jeweils mindestens einen Hebel schwenkbar mit einem Zentralelement gekoppelt und jeder der Zangenarme ist von mindestens einer Feder federnd gegenüber dem Zentralelement verspannt und das Zentralelement ist relativ zum Zangenträger angeordnet. Bei dieser Ausgestaltung ist damit das Greifelement relativ aufwendig ausgestaltet, um seine Öffnungs- und Schließbewegung durchzuführen.

Die DE 10 2009 043 984 A1 beschreibt ein Greifelement zum Halten und Bewegen von Artikeln. Dieses Greifelement weist wiederum mindestens zwei gegeneinander zu öffnende und schließende Greifarme auf, die eine Öffnung bilden, in der das Behältnis gehalten werden kann und welche variabel einstellbar ist.

Der vorliegenden Erfindung liegt daher die Aufgabe zugrunde, eine Greifeinrichtung zu schaffen, welche im Vergleich zu den aus dem Stand der Technik bekannten Greifeinrichtungen einfach herzustellen ist. Daneben soll auch eine kostengünstige Greifeinrichtung geschaffen werden.

Diese Aufgaben werden erfindungsgemäß durch die Gegenstände der unabhängigen Ansprüche gelöst. Vorteilhafte Ausführungsformen und Weiterbildungen sind Gegenstand der Unteransprüche.

Eine erfindungsgemäße Greifeinrichtung zum Greifen von Behältnissen weist ein erstes Greifelement und ein zweites Greifelement auf, wobei das erste Greifelement und das zweite Greifelement jeweils einen Halteabschnitt zum Halten der Behältnisse aufweisen und wobei das erste Greifelement einen Grundkörper aufweist und das zweite Greifelement ebenfalls einen Grundkörper aufweist und wobei wenigstens ein Greifelement um eine vorgegebene Schwenkachse schwenkbar ist, um die Greifeinrichtung zwischen einem geschlossenen Zustand, in dem ein Behältnis gehalten werden kann, und einem geöffneten Zustand (in welchem das Behältnis nicht gehalten wird) überzuführen.

Erfindungsgemäß sind der erste Grundkörper und der zweite Grundkörper in Richtung der Schwenkachse wenigstens abschnittsweise übereinander angeordnet und wenigstens ein Greifelement weist eine Nut auf, in der ein Führungselement verschiebbar gegenüber dieser Nut angeordnet ist, wobei ein Abstand zwischen diesem Führungselement und der Schwenkachse veränderbar ist und die Nut derart verläuft, dass durch eine Veränderung des Abstands zwischen dem Führungselement und der Schwenkachse eine Schwenkbewegung des ersten Greifelements gegenüber dem zweiten Greifelement bewirkt wird.

Bevorzugt liegen die beiden Greifelemente unmittelbar aneinander, wobei sich bevorzugt die Greifelemente über eine vorgegebene Kontaktfläche berühren. Vorteilhaft ist diese Kontaktfläche eine ebene Fläche. Bevorzugt ist wenigstens eine diese Kontaktfläche ausbildende Außenfläche wenigstens eines Greifelements beschichtet oder in einer anderen Weise derart behandelt, dass ein Reibungskoeffizient mit der entsprechenden Kontaktfläche des zweiten Greifelements verringert wird. Vorteilhaft ist die besagte Nut vollständig in dieser Kontaktfläche angeordnet und besonders bevorzugt verläuft auch die Schwenkachse durch diese Kontaktfläche.

Es wird daher eine relativ einfache Konstruktion der beiden Greifelemente bzw. der Greifeinrichtungen vorgeschlagen, wobei die Öffnungs- und Schließbewegung insbesondere durch eine Verschiebung dieses Führungselements, bei dem es sich beispielsweise um einen Bolzen handeln kann, gegenüber einer Nut bzw. einem Langloch erfolgt. Vorteilhaft sind die Greifelemente jeweils aus einem Kunststoff hergestellt. Bei einer weiteren vorteilhaften Ausführungsform sind die Greifelemente einteilig ausgebildet, also beispielsweise der Grundkörper und der Halteabschnitt miteinander einteilig ausgebildet. Vorteilhaft sind jeweils die Halteabschnitte an den ihnen zugeordneten Grundkörpern angeordnet. Bei einer weiteren vorteilhaften Ausführungsform weist der Halteabschnitt eine gekrümmte Kontaktfläche zum Kontaktieren der Mündungen bzw. Mündungsbereiche der Behältnisse auf. Damit können die beiden Halteabschnitte der beiden Greifelemente bevorzugt die zu greifenden Behältnisse an ihren Mündungsabschnitten zumindest jeweils teilweise umschließen.

Bei einer weiteren vorteilhaften Ausführungsform ist das Führungselement im Wesentlichen spielfrei in der Nut angeordnet. Diese bedeutet, dass sich das Führungselement nur entlang eines vorgegebenen Pfades innerhalb dieser Nut bewegen kann und beispielsweise nicht senkrecht dazu, bewegt. Vorzugsweise weist das Führungselement wenigstens abschnittsweise in seiner Längsrichtung einen kreisförmigen Querschnitt auf. Bevorzugt, weist das Führungselement wenigstens in denjenigen Bereichen, in denen es durch die Nut tritt, einen kreisförmigen Querschnitt auf. Auf diese Weise ist es möglich, dass die Nut gegenüber dem Führungselement drehbar ist, insbesondere während das Führungselement entlang der Nut bewegt wird.

Bei einer weiteren vorteilhaften Ausführungsform ist es auch möglich, dass ein Federungselement vorgesehen ist, welches die beiden Greifelemente entweder in einen geschlossenen Zustand, bzw. einen Haltezustand, in dem das Behältnis gehalten werden kann, drängt oder aber in einem geöffneten Zustand, in dem die Greifelemente auseinandergedrückt werden. Dabei ist es denkbar, dass ein derartiges Federelement zwischen den beiden Greifelementen angeordnet ist. Es wäre jedoch auch denkbar, dass ein derartiges Federelement bezüglich der Schwenkachse auf dem gegenüberliegenden Ende der Greifelemente bezüglich der Halteabschnitte angeordnet ist.

Durch die erfindungsgemäße Ausführungsform ist es möglich, eine extrem schmale Klammer, bzw. ein extrem schmales Greifelement herzustellen, welches damit weniger Platz benötigt. Auch kann die Anzahl der Bauteile deutlich reduziert werden, sodass beispielsweise lediglich vier Bauteile zum Halten der Behältnisse notwendig sind. Auch ist es möglich, die Halteabschnitte derart auszulegen, dass auch größere Behältnisse bzw. Behältnismündungsbereiche gegriffen werden können. Daneben kann durch die erfindungsgemäße Greifeinrichtung auch das Ein- und Ausbauen erleichtert werden und daneben können auch die Herstellungskosten verringert werden. Im Gegensatz zu vielen Greifelementen aus dem Stand der Technik ist es bei den erfindungsgemäßen Greifeinrichtungen auch nicht nötig, diese von oben her anzusteuern.

Bei einer weiteren vorteilhaften Ausführungsform ist auch das andere Greifelement um die vorgegebene Schwenkachse oder eine hierzu parallele Schwenkachse schwenkbar. So wäre es möglich, dass die Schwenkachse mechanisch durch einen weiteren Bolzen gebildet wird, der durch beide Greifelemente hindurch ragt. Es könnten jedoch auch zwei parallel zueinander versetzte Bolzen vorgesehen sein.

Vorteilhaft weist auch das andere Greifelement eine Nut auf. Besonders bevorzugt ragt das oben genannte Führungselement sowohl durch die erste Nut (des ersten Greifelements) als auch durch die zweite Nut (des zweiten Greifelements), sodass durch eine Bewegung bzw. Abstandsänderung zwischen dem Führungselement und der Schwenkachse beide Greifelemente bewegt werden können. Es wäre jedoch auch denkbar, dass ein zweites Führungselement vorhanden ist, welches in die Nut des zweiten Greifelements eingreift.

Bei einer weiteren vorteilhaften Ausführungsform ist daher das Führungselement in beiden Nuten und diesen Nuten gegenüber verschiebbar angeordnet.

Vorteilhaft sind beide Greifelemente schwenkbar gegenüber einem Schwenkbolzen und/oder einer Längsrichtung dieses Schwenkbolzens angeordnet. Dieser Schwenkbolzen bildet damit, wie oben ausgeführt, geometrisch auch die Schwenkachse der beiden Greifelemente. Vorteilhaft weist damit auch dieser Schwenkbolzen wenigstens abschnittsweise in seiner Längsrichtung einen kreisförmigen Querschnitt auf und weist zumindest in demjenigen Bereich, in dem er durch die entsprechende Öffnung der Greifelemente hindurchtritt, einen kreisförmigen Querschnitt auf.

Bei einer weiteren vorteilhaften Ausführungsform weisen die beiden Greifelemente eine identische Gestalt auf. Dies erleichtet die Herstellung, da nur ein Bauteil als Greifelement hergestellt werden muss. Vorteilhaft wird jedoch beim Zusammenbau eines der beiden Greifelemente umgedreht und bevorzugt an das andere Greifelement angelegt, sodass diese insgesamt eine symmetrische Gestaltung ausbilden.

Damit sind vorteilhaft die Greifelemente unabhängig von einer Öffnungsstellung der Greifeinrichtung stets symmetrisch zueinander angeordnet. Vorteilhaft kann dabei eine Symmetrieebene gebildet werden, in der auch die Öffnungs- und Schließbewegung der Greifeinrichtung abläuft. Genauer gesagt ist diese Symmetrie gegeben bezüglich einer Ebene, welche durch eine Längsrichtung der zu greifenden Behältnisse und eine Gerade gebildet wird, welche durch die Schwenkachse und dem Bolzen verläuft. Dies wird unter Bezugnahme auf die Figuren genauer erläutert.

Bei einer weiteren vorteilhaften Ausführungsform weist wenigstens eine der besagten Nuten wenigstens abschnittsweise einen gekrümmten Verlauf auf. Vorteilhaft ist die Nut zumindest abschnittsweise schräg bezüglich einer Verbindungslinie zwischen der Schwenkachse und dem Führungselement ausgebildet, das heißt schräg gegenüber einer Linie, in der der oben besagte Abstand zwischen dem Bolzen und dem Führungselement verändert wird. Durch das Ausführen eines gekrümmten Verlaufs kann eine fließende Öffnungs- und Schließbewegung ohne ruckartige Bewegungsabschnitte durchgeführt werden.

Bei einer weiteren vorteilhaften Ausführungsform ist die Nut in einem ersten Flächenabschnitt des Greifelements angeordnet und der Halteabschnitt in einem zweiten Flächenabschnitt des Greifelements und der erste Flächenabschnitt ist gegenüber dem zweiten Flächenabschnitt in Richtung der Schwenkachse versetzt. Auf diese Weise ist es denkbar, dass insbesondere die beiden Grundkörper der Greifelemente übereinander angeordnet sind, gleichwohl jedoch die Halteabschnitte bezüglich der Schwenkachse auf gleicher Höhe angeordnet sind, damit so das Behältnis von beiden Halteabschnitten auf der gleichen Höhe gegriffen werden kann. Es wäre jedoch auch denkbar, dass bewusst die Halteabschnitte in Richtung der Schwenkachse auf unterschiedlichen Höhen gewählt werden, um beispielsweise eine Übergabe an weitere Greifelemente, die hierzu komplementär ausgebildet sind, zu ermöglichen.

Die vorliegende Erfindung ist weiterhin auf ein Greifelement zum Greifen von Behältnissen gerichtet, welches einen Grundkörper aufweist und einen an diesen Grundkörper angeordneten und einteilig mit diesem ausgebildeten Halteabschnitt zum Halten der Behältnisse. Weiterhin weist das Greifelement ein Loch auf, durch welches ein Bolzen derart führbar ist, dass das Greifelement schwenkbar bezüglich dieses Bolzens und/oder einer Längsrichtung dieses Bolzens ist. Weiterhin weist das Greifelement eine Nut auf, durch welche hindurch ein Führungselement führbar ist, wobei das Führungselement in einer sich senkrecht zu einer Längsrichtung des Führungselementes erstreckenden Richtung gegenüber dem Greifelement bzw. der Nut bewegbar ist und wobei die Nut schräg bezüglich einer geometrischen Verbindungslinie zwischen dem Bolzen bzw. dem Loch und dem Führungselement verläuft, derart, dass bei einer Veränderung des Abstandes zwischen dem Bolzen und dem Führungselement das Greifelement um eine Schwenkachse geschwenkt wird.

Weiterhin ist die Nut in einem ersten Flächenabschnitt des Greifelements angeordnet und der Halteabschnitt in einem zweiten Flächenabschnitt des Greifelements und der erste Flächenabschnitt ist gegenüber dem zweiten Flächenabschnitt in Richtung der Schwenkachse versetzt.

Die vorliegende Erfindung ist weiterhin auf eine Vorrichtung zum Transportieren von Behältnissen gerichtet, welche einen Träger aufweist, an dem eine Vielzahl von Greifelementen der oben beschriebenen Art angeordnet ist sowie auch ein Stellelement, welches geeignet ist, einen Abstand zwischen der Schwenkachse und dem Führungselement der Greifeinrichtungen zu verändern.

Vorteilhaft handelt es sich bei diesem Stellelement um eine Führungskurve. Damit kann die Führungskurve entweder den Bolzen, der die Schwenkachse bildet, oder auch das Führungselement in einer bevorzugt radialen Richtung bewegen, um so die Öffnungs- und Schließbewegungen der Greifeinrichtungen zu erreichen. So ist es beispielsweise möglich, dass mithilfe einer Kurvenscheibe der erste Bolzen, der die Schwenkachse bildet, nach hinten bzw. nach radial innen gezogen wird, sodass beide Greifelemente gleichzeitig geöffnet werden. Beim Zurückfahren dieses ersten Bolzens kann die Klammer wieder geschlossen werden.

Vorteilhaft ist der besagte Träger drehbar. Daneben kann eine derartige Vorrichtung beispielsweise als Übergabestern eingesetzt werden, welcher Behältnisse an weitere Anlagenteile, wie etwa Füller und dergleichen übergibt. Bei den Behältnissen kann es sich insbesondere um Kunststoffbehältnisse handeln und hierbei wiederum beispielsweise um Kunststoffflaschen aber auch um Kunststoffvorformlinge, welche durch einen Formgebungsprozess, beispielsweise einen Blasprozess, in Kunststoffflaschen umgewandelt werden.

Weitere Vorteile und Ausführungsformen ergeben sich aus den beigefügten Zeichnungen:
Darin zeigen:
   - Fig. 1: Eine schematische Darstellung einer erfindungsgemäßen Vorrichtung zum Transportieren von Behältnissen;
   - Fig. 2: eine erste Ansicht einer erfindungsgemäßen Greifeinrichtung in einen teilweise geöffneten Zustand;
   - Fig. 3: eine Darstellung einer Greifeinrichtung in einem vollständig geöffneten Zustand;
   - Fig. 4: eine Darstellung der Greifeinrichtung in einem geschlossenen Zustand;
   - Fig. 5: eine perspektivische Darstellung der Greifeinrichtung in einem geöffneten Zustand; und
   - Fig. 6: eine Darstellung der Greifeinrichtung in einem nahezu geschlossenen Zustand.

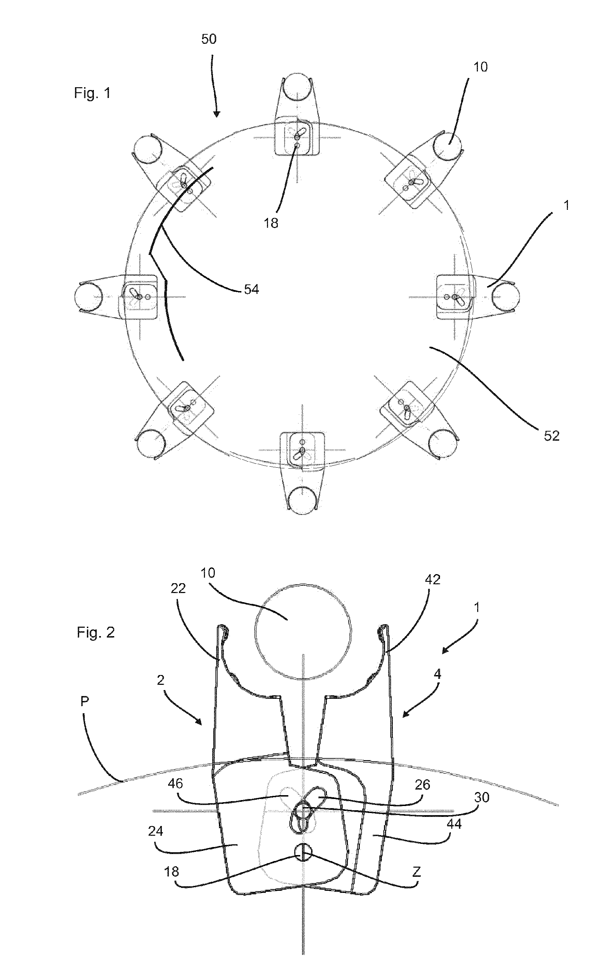

Fig. 1 zeigt eine Darstellung einer Vorrichtung 50 zum Transportieren von Behältnissen 10. Diese Vorrichtung 50 weist dabei einen Träger 52 auf, der drehbar angeordnet ist, und an dem eine Vielzahl von erfindungsgemäßen Greifeinrichtungen 1 angeordnet ist. Dabei sind diese Greifeinrichtungen 1 hier jeweils in einem geschlossenen Zustand gezeigt, das heißt in einem Zustand, in dem die Behältnisse 10 jeweils gegriffen werden.

Das Bezugszeichen 54 kennzeichnet grob schematisch eine Führungskurve, die hier dazu dient, um einen Bolzen 18, der auch gleichzeitig die Schwenkachse der Greifelemente definiert, nach hinten zu ziehen, um so eine Öffnungs- und Schließbewegung der Greifeinrichtungen zu erreichen. Dies wird genauer untenstehend erläutert. Daneben kann eine weitere Führungskurve vorgesehen sein, welche die entsprechende Schließ- bzw. Öffnungsbewegung der Greifeinrichtungen erzeugt.

Fig. 2 zeigt eine Greifeinrichtung in einem teilweise geöffneten Zustand. Diese Greifeinrichtung 1 weist dabei ein erstes Greifelement 2 und ein zweites Greifelement 4 auf. Beide Greifelemente 2, 4 weisen jeweils Halteabschnitte 22, 42 auf, welche zum Halten eines (nur schematisch dargestellten) Kunststoffbehältnisses 10 dienen. Weiterhin weisen beide Greifelemente 2,4 jeweils Grundkörper 24 und 44 auf, an denen die Halteabschnitte 22 und 42 angeordnet sind.

Das Bezugszeichen 18 kennzeichnet einen Bolzen, der gleichzeitig auch die Schwenkachse Z, um welche die beiden Greifelemente 2,4 schwenkbar sind, definiert. Damit sind die Greifelemente hier in der Figurenebene schwenkbar. Das Greifelement 2 weist eine Nut 26 auf, welche hier einen gekrümmten Verlauf aufweist. Auch das Greifelement 4 weist eine (nur blass dargestellte) Nut 46 auf, die jedoch hier durch den Grundkörper 24 des ersten Greifelements 2 verdeckt wird. Durch beide Nuten 26, 46 ist ein Führungselement 30 geführt und kann sich auch gegenüber diesen Nuten 26 und 46 bewegen. Durch diese Relativbewegung des Führungselements 30 gegenüber diesen Nuten wird die Schwenkbewegung der beiden Greifelemente 2, 4 bezüglich einander erreicht. Daher wird zum Öffnen und Schließen der Greifeinrichtung 1 lediglich der Abstand zwischen dem Bolzen 18 und dem Führungselement 30 verändert.

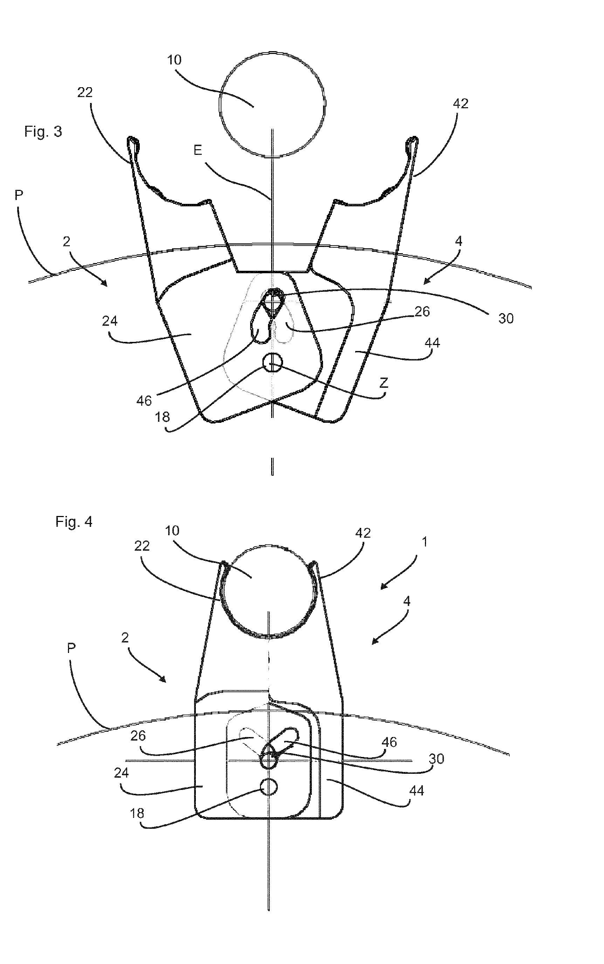

Fig. 3 zeigt eine erfindungsgemäße Greifeinrichtung in einem vollständig geöffneten Zustand. Hier ist das Führungselement jeweils am obersten Ende der beiden Nuten 26 und 46 angeordnet und damit sind die Greifelemente 22 und 42 maximal weit auseinandergedrängt bzw. geöffnet. Das Bezugszeichen E kennzeichnet einerseits eine Verbindungslinie zwischen dem Bolzen 18 und dem Führungselement 30, welche hier aber auch gleichzeitig gemeinsam mit der Schwenkachse Z (welche senkrecht zur Figurenebene steht) eine Spiegelebene aufspannt, bezüglich derer die beiden Greifelemente 2, 4 unabhängig von ihrer Öffnungsstellung stets symmetrisch sind. Das Bezugszeichen P kennzeichnet einen Bewegungspfad der Greifelemente 1, welcher hier kreisförmig verläuft.

Fig. 4 zeigt eine Greifeinrichtung 1 in einem geschlossenen Zustand. Man erkennt, dass hier das Führungselement 30 jeweils an dem untersten Ende der beiden Nuten 26 und 46 angelangt ist und auf diese Weise die beiden Greifelemente 2, 4 vollständig aufeinander zugestellt sind und entsprechend die Halteabschnitte 22 und 42 das Behältnis 10 greifen können.

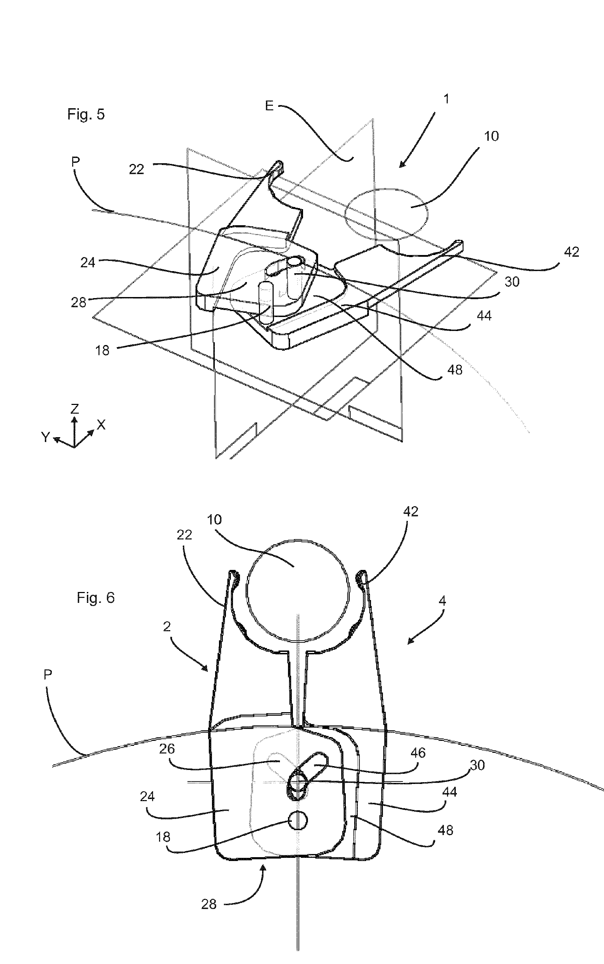

Fig. 5 zeigt eine perspektivische Darstellung eines Greifelements 1, wiederum in einem geöffneten Zustand. Auch hier ist wieder die Spiegelebene E erkennbar, bezüglich derer die beiden Greifelemente stets symmetrisch sind. Diese Ebene wird hier durch die unten dargestellten Achsen X und Z gebildet.

Man erkennt weiterhin, dass der Grundkörper 44 und 24 jeweils in der Richtung Z dicker ausgeführt ist, als der Halteabschnitt. Weiterhin bilden die beiden Grundkörper 24, 44 jeweils ausgeschnittene bzw. versetzte Flächen 48 (die entsprechende Fläche 28 ist hier jedoch rückwärtig angeordnet) aus, in deren Bereich die beiden Grundkörper 44 und 24 übereinander angeordnet sind. Die Halteabschnitte 22 und 42 sind dabei jeweils versetzt gegenüber diesen Flächen 48 ausgebildet, sodass insgesamt die beiden Halteabschnitte 22 und 42 in der Richtung Z auf gleicher Höhe sind. Weiterhin erkennt man, dass die beiden Greifelemente 2,4 vollkommen gleichartig ausgebildet sind, jedoch eines der beiden Greifelemente bezüglich dem anderen umgedreht ist, um auf diese Weise die symmetrische Ausgestaltung der Greifeinrichtung 1 in ihrer Gesamtheit auszubilden.

Fig. 6 zeigt eine Greifeinrichtung in einem nahezu geschlossenen Zustand. Entsprechend ist das Führungselement 30 in den beiden Nuten 26 und 46 relativ weit am unteren Ende angeordnet. Auch erkennt man hier wieder die versetzten Bereiche 28, 48, wobei hier in dem Bereich 48 ein Grundkörperabschnitt des Grundkörpers 24 einliegt und umgekehrt auch (jedoch nicht sichtbar) ein Grundkörper 44 in einem entsprechenden Abschnitt des Greifelements 2 einliegt.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Greifeinrichtungen
- 2: erstes Greifelement
- 4: zweites Greifelement
- 10: Behältnisse
- 18: Bolzen
- 22: Halteabschnitt
- 24: Grundkörper
- 26: Nut
- 28: versetzte Fläche
- 30: Führungselement
- 42: Halteabschnitt
- 44: Grundkörper
- 46: Nut
- 48: versetzte Fläche
- 50: Vorrichtung
- 52: Träger
- 54: Führungskurve
- Z: Schwenkachse/Richtung
- E: Spiegelebene
- X: Achse
- P: Transportpfad

## Patentansprüche

1. Greifeinrichtung (1) zum Greifen von Behältnissen (10) mit einem ersten Greifelement (2) und einem zweiten Greifelement (4), wobei das erste Greifelement (2) und das zweite Greifelement (4) jeweils einen Halteabschnitt (22, 42) zum Halten der Behältnisse (10) aufweisen und wobei das erste Greifelement (2) einen Grundkörper (24) aufweist und das zweite Greifelement (4) ebenfalls einen Grundkörper (44) aufweist und wobei wenigstens ein Greifelement (2, 4) um eine vorgegebene Schwenkachse (Z) schwenkbar ist, um die Greifeinrichtung (1) zwischen einem geschlossenen Zustand, in dem ein Behältnis (10) gehalten werden kann und einem geöffneten Zustand überzuführen,
**dadurch gekennzeichnet, dass**
der erste Grundkörper (24) und der zweite Grundkörper (44) in Richtung der Schwenkachse (Z) wenigstens abschnittsweise übereinander angeordnet sind und dass wenigstens ein Greifelement (2, 4) eine Nut (26, 46) aufweist, in der ein Führungselement (30) verschiebbar gegenüber dieser Nut (26, 46) angeordnet ist, wobei ein Abstand zwischen diesem Führungselement (30) und der Schwenkachse (Z) veränderbar ist und die Nut (26, 46) derart verläuft ist, dass durch eine Veränderung des Abstands zwischen dem Führungselement (30) und der Schwenkachse (Z) eine Schwenkbewegung des ersten Greifelements (2) gegenüber dem zweiten Greifelement (4) bewirkt wird.

2. Greifeinrichtung (1) nach Anspruch 1,
**dadurch gekennzeichnet, dass**
auch das andere Greifelement (4, 2) um die vorgegebene Schwenkachse (Z) oder eine hierzu parallele Schwenkachse schwenkbar ist.

3. Greifeinrichtung (1) nach wenigstens einem der vorangegangenen Ansprüche,
**dadurch gekennzeichnet, dass**
auch das andere Greifelement (2, 4) eine Nut (46, 26) aufweist.

4. Greifeinrichtung (1) nach Anspruch 3,
**dadurch kennzeichnet, dass**
das Führungselement in beiden Nuten (46, 26) und diesen Nuten gegenüber verschiebbar angeordnet ist.

5. Greifeinrichtung (1) nach wenigstens einem der vorangegangenen Ansprüche,
**dadurch gekennzeichnet, dass**
beide Greifelemente schwenkbar gegenüber einem Schwenkbolzen (18) angeordnet sind.

6. Greifeinrichtung (1) nach wenigstens einem der vorangegangenen Ansprüche,
**dadurch gekennzeichnet, dass**
die beiden Greifelemente (2, 4) eine identische Gestalt aufweisen.

7. Greifeinrichtung (1) nach Anspruch 6,
**dadurch gekennzeichnet, dass**
die Greifelemente (2, 4) unabhängig von einer Öffnungsstellung der Greifeinrichtung (1) stets symmetrisch zueinander angeordnet sind.

8. Greifeinrichtung (1) nach wenigstens einem der vorangegangenen Ansprüche,
**dadurch gekennzeichnet, dass**
wenigstens eine Nut wenigstens abschnittsweise einen gekrümmten Verlauf aufweist.

9. Greifeinrichtung (1) nach wenigstens einem der vorangegangenen Ansprüche,
**dadurch gekennzeichnet, dass**
die Nut (26, 46) in einem ersten Flächenabschnitt des Greifelements (2, 4)angeordnet ist und der Halteabschnitt (22, 42) in einem zweiten Flächenabschnitt des Greifelements (2, 4) und der erste Flächenabschnitt gegenüber dem zweiten Flächenabschnitt in Richtung der Schwenkachse (Z) versetzt ist.

10. Greifelement (2, 4) zum Greifen von Behältnissen (10) mit einem Grundkörper (24, 44) mit einem an diesem Grundkörper (24, 44) angeordneten und einteilig mit diesem ausgebildeten Halteabschnitt (22, 42) zum Halten der Behältnisse (10), mit einem Loch (28, 48), durch welches ein Bolzen (18) derart führbar ist, dass das Greifelement (2, 4) schwenkbar bezüglich einer Längsrichtung dieses Bolzens (18) ist und mit einer Nut (26, 46) durch welche hindurch ein Führungselement (30) führbar ist, wobei das Führungselement (30) in einer sich senkrecht zu einer Längsrichtung des Führungselements (30) erstreckenden Richtung gegenüber dem Greifelement (2, 4) bewegbar ist, und wobei die Nut (26, 28) wenigstens abschnittsweise schräg bezüglich einer geometrischen Verbindungslinie zwischen dem Bolzen (18) und dem Führungselement (30) verläuft, derart, dass bei einer Veränderung eines Abstandes zwischen dem Bolzen (18) und dem Führungselement (30) das Greifelement (2, 4) um eine Schwenkachse (Z) geschwenkt wird und wobei die Nut (26, 46) in einem ersten Flächenabschnitt des Greifelements (2, 4)angeordnet ist und der Halteabschnitt (22, 42) in einem zweiten Flächenabschnitt des Greifelements (2, 4) und der erste Flächenabschnitt gegenüber dem zweiten Flächenabschnitt in Richtung der Schwenkachse (Z) versetzt sind.

11. Vorrichtung (50) zum Transportieren von Behältnissen (10) mit einem Träger (52), an dem eine Vielzahl von Greifelementen (1) angeordnet sind nach wenigstens einem der vorangegangenen Ansprüche, und einem Stellelement (54), welches geeignet ist, einen Abstand zwischen der Schwenkachse (Z) und dem Führungselement (30) zu verändern.
